# EUROPÄISCHE PATENTSCHRIFT

(11) **EP 1 850 470 B1**
(45) Veröffentlichungstag und Bekanntmachung des Hinweises auf die Patenterteilung: **31.08.2011**
(21) Anmeldenummer: 07105018.1
(22) Anmeldetag: 27.03.2007
(51) Int. Cl.: H02M 7/217, H02M 7/797, H02M 1/32, H02M 3/335

(54) **Synchrongleichrichter-Schaltung und Verfahren zum Betrieb der Synchrongleichrichter-Schaltung**
Synchronous rectifier and method for the operation of a synchronous rectifier
Redresseur synchrone et procédé de fonctionnement d'un redresseur synchrone

(30) Priorität: 26.04.2006 DE 102006019471
(43) Veröffentlichungstag der Anmeldung: 31.10.2007
(73) Patentinhaber: Siemens Aktiengesellschaft, 80333 München (DE)
(72) Erfinder: Hallak, Jalal, 1220 Wien (AT)

(56) Entgegenhaltungen:
- US-A1- 2003 086 280
- US-A1- 2004 136 207

## Beschreibung

Die Erfindung betrifft eine Synchrongleichrichter-Schaltung zum Einsatz in einem taktenden Wandler, wobei ein erster Metalloxid-Halbleiter-Feldeffekttransistor mit einer parasitären ersten Diode zur Gleichrichtung vorgesehen ist und wobei in Reihe mit dem ersten Metalloxid-Halbleiter-Feldeffekttransistor ein synchron zum ersten Metalloxid-Halbleiter-Feldeffekttransistor gesteuerter zweiter Metalloxid-Halbleiter-Feldeffekttransistor mit einer parasitären zweiten Diode in der Weise angeordnet ist, dass die Durchlassrichtung der zweiten Diode entgegengesetzt zur Durchlassrichtung der ersten Diode ist. Des Weiteren betrifft die Erfindung ein Betriebsverfahren der Synchrongleichrichter-Schaltung.

Taktende Wandler dienen der Umwandlung von elektrischer Energie und sind seit langem bekannt. Man kennt unterschiedliche Topologien wie Aufwärtswandler, Abwärtswandler, Sperrwandler etc.

Die getaktete Ausgangsspannung wird in der Regel mittels Gleichrichterschaltung geglättet. Im einfachsten Fall werden dazu eine Gleichrichterdiode und ein Glättungskondensator eingesetzt. Eine Gleichrichterdiode bewirkt dabei jedoch aufgrund der Durchlassspannung einen Verlust, der vor allem bei größeren Energieübertragungen nicht vernachlässigbar ist.

Nach dem Stand der Technik kommen deshalb zur Verbesserung des Wirkungsgrads Synchrongleichrichter-Schaltungen mit Metalloxid-Halbleiter-Feldeffekttransistor (MOSFET) zur Anwendung, welche gegenüber Dioden eine geringere Abfallspannung am Drain-Source-Kanal aufweisen. Ein MOSFET oder eine Parallelschaltung mehrerer MOSFETs übernimmt hier die Funktion der Gleichrichterdiode.

Die US 6 246 593 B1 beschreibt beispielsweise eine solche Synchrongleichrichter-Schaltung für einen Sperrwandler, wobei als Gleichrichterelement ein MOSFET vorgesehen ist. Der MOSFET ist dabei so angeordnet, dass ein positiver Strom vom Source- zum Drainanschluss fließt und dass ein negativer Strom blockiert wird. Ein nachgeschalteter Kondensator wirkt als Glättungselement um am Ausgang einen geglätteten Gleichstrom zu erhalten.

Bei MOSFETS ist in der Regel eine parasitäre Diode aufgrund einer internen Verbindung der Anschlüsse Source und Bulk vorhanden. Diese Verbindung ist erforderlich, da ein Potentialunterschied zwischen Source und Bulk die Eigenschaften des Transistors - vor allem die Schwellenspannung - negativ beeinflusst (body effect). Dadurch entsteht zwangsläufig eine Diode zwischen Source- und Drainanschluss, die parallel zum eigentlichen Transistor liegt.

Diese Diode führt dazu, dass die übertragbare Leistung für Wandler mit MOSFET-Synchrongleichrichter-Schaltung begrenzt ist, da die im MOSFET vorhandene parasitäre Diode bei höheren Spannungen zu Problemen führt. Bei MOSFETs zum Schalten von höheren Spannungen tritt die Eigenschaft auf, dass der Durchgangswiderstand des im MOSFET enthaltenen Transistors höher ist als jener der im MOSFET enthaltenen parasitären Diode. Während einer Leitphase fließt dann der Strom nicht mehr durch den eingeschalteten Transistor, sondern durch die parasitäre Diode.

Dabei wird in der Diode eine Ladung gespeichert, die während einer auf die Leitphase folgenden Sperrphase einen Stromkurzschluss verursacht, welcher zur Zerstörung des im MOSFET enthaltenen Transistors führen kann.

Die US 2004/136207 A1 beschreibt eine Synchrongleichrichter-Schaltung, die zwei in Serie geschaltete MOSFETs umfassen, wobei diese MOSFETs in der Weise angeordnet sind, dass die Durchlassrichtungen der entsprechenden parasitären Dioden entgegengesetzt sind. Eine derartige Serienschaltung zweier MOSFETs ist auch aus der US 2003/086280 A1 bekannt.

Der Erfindung liegt die Aufgabe zugrunde, für die eingangs genannte synchrongleichrichter-Schaltung eine Verbesserung gegenüber dem Stand der Technik anzugeben.

Erfindungsgemäß wird diese Aufgabe gelöst mit einer Synchrongleichrichter-Schaltung zum Einsatz in einem taktenden Wandler, wobei ein erster Metallaxid-Halbleitermit einer parasitären ersten Diode zur Gleichrichtung vorgesehen ist, wobei in Reihe mit dem ersten Metalloxid-Halbleiter-Feldeffekttransistor ein synchron zum ersten Metalloxid-Halbleiter-Feldeffekttransistor gesteuerter zweiter Metalloxid-Halbleiter-Feldeffekttransistor mit einer parasitären zweiten Diode in der Weise angeordnet ist, dass die Durchlassrichtung der zweiten Diode entgegengesetzt zur Durchlassrichtung der ersten Diode ist. Des Weiteren ist parallel zu der aus den beiden Metalloxid-Halbleiter-Feldeffekttransistoren bestehenden Reihenschaltung eine dritte Diode angeordnet, deren Durchlassrichtung der Durchlassrichtung der ersten Diode entspricht. Parallel zum ersten Metalloxid-Halbleiter-Feldeffekttransistor ist eine schaltbare Spannungsquelle in der Weise vorgesehen, dass der positive Pol der Spannungsquelle mit der Kathode der ersten Diode und der negative Pol der Spannungsquelle mit der Anode der ersten Diode verbunden sind.

Dieser Anordnung ermöglicht auch für höhere Spannungen eine Synchrongleichrichter-Schaltung mit dem ersten MOSFET als Gleichrichterelement, wobei der Durchgangswiderstand des Transistors größer als jener der parasitären Diode sein kann. Vor dem Beginn einer Sperrphase kommutiert durch Abschaltung beider MOSFETs der Strom auf die dritte Diode und die Ladung in der parasitären Diode wird durch die eingeschaltete Spannungsquelle aufgeräumt. Damit ist der Hochleistungs-MOSFET zu Beginn der Sperrphase gegen einen Stromkurzschluss geschützt. Der zweite MOSFET dient dabei zur Trennung des ersten MOSFETs von der sekundärseitigen Spannung während der Kommutierungsphase.

Eine vorteilhafte Ausführung dieser Anordnung ist für taktende Bidirektional-Wandler gegeben. In umgekehrter Richtung fließt dann bei eingeschalteten MOSFETs der Strom immer durch die Transistoren der beiden MOSFETS. Der ersten MOSFET ist durch die sperrende parasitäre Diode geschützt. Beim als Niederspannungs-MOSFET ausgebildeten zweiten MOSFET ist hingegen immer der Durchgangswiderstand des Transistors geringer als der Durchgangswiderstand der parasitären Diode. In der Diode des zweiten MOSFETs bildet sich demnach keine unerwünschte Ladung, die beim Abschalten zu einem Stromkurzschluss führen könnte.

Von Vorteil ist es des Weiteren, wenn zur Ansteuerung des ersten und des zweiten Metalloxid-Halbleiter-Feldeffekttransistors ein erster Treiber vorgesehen ist, der mit einem Taktsignal des Wandlers beaufschlagt ist. Mit diesem Treiber ist eine einfache Steuerung der beiden MOSFETs realisiert, wobei die Schaltvorgänge in Abhängigkeit vom vorgegebenen Taktsignal des Wandlers erfolgen.

Des Weiteren ist es vorteilhaft, die schaltbare Spannungsquelle in der Weise auszubilden, dass ein mit dem inversen Taktsignal des Wandlers beaufschlagter zweiter Treiber eine Spannungsquelle über eine vierte Diode parallel zum ersten Metalloxid-Halbleiter-Feldeffekttransistor schaltet und dass die Kathode der vierten Diode mit der Kathode der ersten Diode verbunden ist. Damit ist mittels des zweiten Treibers auch die während der Kommutierungsphase zum Aufräumen der parasitären Diode des ersten MOSFETs benötigte Spannungsquelle in einfacher Weise schaltbar, wobei die Spannungsquelle bei eingeschalteten MOSFETs abgeschaltet ist. Während der Sperrphase wird der zweite Treiber durch die vierte Diode geschützt, welche in dieser Phase sperrt.

Dabei ist es von Vorteil, wenn ein Verbindungspunkt zwischen dem ersten Metalloxid-Halbleiter-Feldeffekttransistors und dem zweiten Metalloxid-Halbleiter-Feldeffekttransistors vorgesehen ist und wenn dieser Verbindungspunkt über den ersten Treiber mit den Gates der beiden Metalloxid-Halbleiter-Feldeffekttransistoren verbunden ist. Zusätzlich ist dieser Verbindungspunkt über den zweiten Treiber und die vierte Diode mit der Kathode der ersten Diode verbunden.

Damit ist ein einfacher Schaltungsaufbau zum Schalten der MOSFETs und der Spannungsquelle gegeben.

Die erfindungsgemäße Anordnung wird so betrieben, dass zu Beginn einer Leitphase beide Metalloxid-Halbleiter-Feldeffekttransistoren eingeschaltet werden und die Spannungsquelle unterbrochen wird und dass zu einem vorgegebenen Startzeitpunkt einer Kommutierungsphase vor Beginn der Sperrphase die beiden Metalloxid-Halbleiter-Feldeffekttransistoren abgeschaltet werden und gleichzeitig die Spannungsquelle bis zu Beginn der nächsten Leitphase eingeschaltet wird. Der Startzeitpunkt der Kommutierungsphase leitet sich dabei vom Taktsignal des Wandlers und einer für die Kommutierungsphase vorgegebenen Dauer ab. Damit wird sichergestellt, dass die Kommutierungsphase lange genug ist, um die Ladung in der parasitären Diode des ersten MOSFETs aufzuräumen. Andererseits ist die Kommutierungsphase kurz genug, um den Stromfluss durch die dritte Diode, die gegenüber den MOSFETs einen höheren Widerstand aufweist, im Verhältnis zum Gesamtstromfluss gering zu halten.

Dabei ist es von Vorteil, wenn zu Beginn der Kommutierungsphase der Verbindungspunkt zwischen den beiden MOSFETs über den zweiten Treiber und die vierte Diode an die Kathode der ersten Diode geschaltet wird und wenn zu Beginn der nächsten Leitphase der Verbindungspunkt mittels zweitem Treiber von der Kathode der ersten Diode getrennt wird. Der Strompfad zum Aufräumen der parasitären Diode des ersten MOSFETs ist dann während der Kommutierungsphase und der Sperrphase in Durchlassrichtung der vierten Diode offen. Während der Sperrphase fließt jedoch aufgrund der Polumkehr der Spannung und der sperrenden vierten Diode kein Strom.

Die Erfindung wird nachfolgend in beispielhafter Weise unter Bezugnahme auf die beigefügten Figuren erläutert. Es zeigen in schematischer Darstellung:
- Fig. 1: Niederspannungs-MOSFET in Synchrongleichrichter-Schaltung
- Fig. 2: Hochspannungs-MOSFET in Synchrongleichrichter-Schaltung während einer Leitphase
- Fig. 3: Hochspannungs-MOSFET in Synchrongleichrichter-Schaltung während einer Sperrphase
- Fig. 4: Erfindungsgemäße Synchrongleichrichter-Schaltung
- Fig. 5: Erfindungsgemäße Synchrongleichrichter-Schaltung während einer Leitphase
- Fig. 6: Erfindungsgemäße Synchrongleichrichter-Schaltung während einer Kommutierungsphase
- Fig. 7: Erfindungsgemäße Synchrongleichrichter-Schaltung während einer Sperrphase
- Fig. 8: Verlauf der Spannungen und Ströme über der Zeit

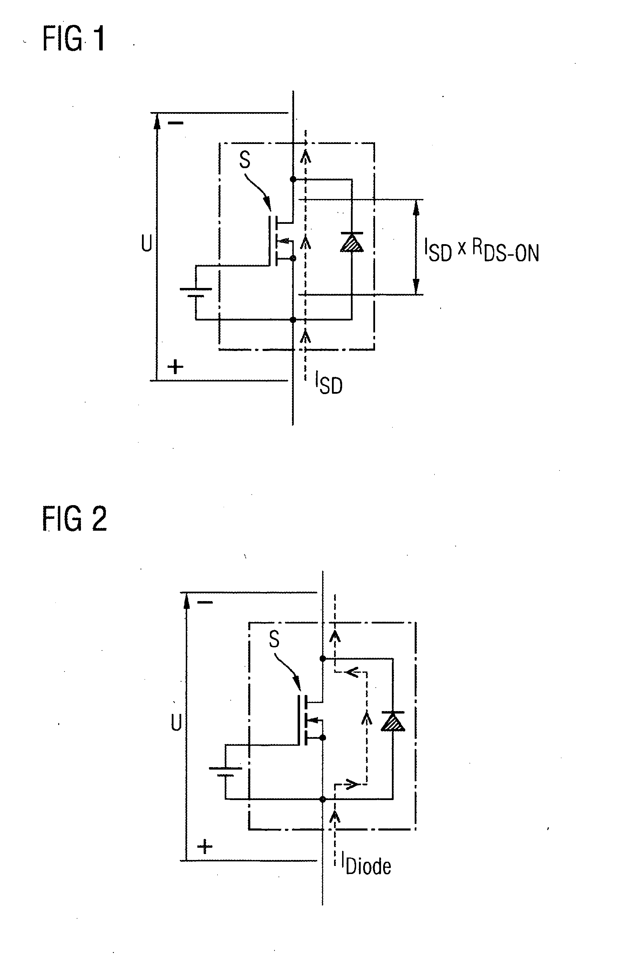

In Fig. 1 ist ein Niederspannungs-MOSFET S mit einem Transistor und einer parasitären Diode dargestellt. Bei Synchrongleichrichter-Schaltungen sind MOSFETs in der Regel so angeordnet, dass der Strom I_{SD} während der Leitphase von Source zu Drain fließt. Die am MOSFET S anliegende Spannung U erzeugt diesen Strom I_{SD} durch den Transistor des MOSFETs S. Dabei fällt die Spannung I_{SD} x R_{DS-ON} ab, wobei R_{DS-ON} der Durchgangswiderstand des eingeschalteten Transistors ist. Die Durchlassspannung der parallel geschalteten parasitären Diode ist beim Niederspannungs-MOSFET höher, deshalb fließt durch die Diode kein Strom und es baut sich keine Ladung auf.

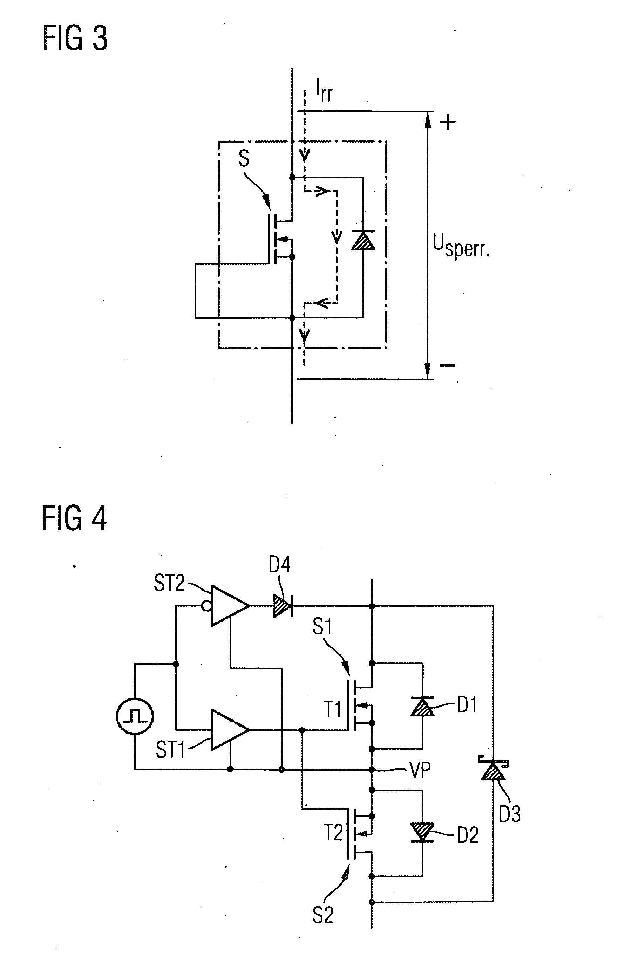

Fig. 2 und Fig. 3 zeigen einen Hochspannungs-MOSFET S, der zum Schalten von beispielsweise 500 V geeignet ist und sich dadurch auszeichnet, dass der Durchgangswiderstand durch die parasitäre Diode geringer ist als der Durchgangswiderstand durch den Transistor. Während der Leitphase L fließt somit trotz eingeschaltetem Transistor der gesamte Strom I_{Diode} durch die Diode. Aufgrund der in jeder Diode vorhandenen Kapazität speichert die Diode dabei eine Ladung, die während der auf die Leitphase L folgenden Sperrphase Sp mit der Sperrspannung Uₛₚₑᵣᵣ den sogenannten Revers-Recovery-Strom Iᵣᵣ erzeugt und so zu einem Strom-Kurzschluss führt. Dieser Vorgang führt zu einer Zerstörung des Transistors.

Erfindungsgemäß ist deshalb eine in Figur 4 dargestellte Synchrongleichrichter-Schaltung vorgesehen, die eine Zerstörung des Transistors auch bei Hochspannungs-MOSFETs sicher verhindert. In Reihe mit dem Hochspannungs-MOSFET S1 ist ein zweiter Niederspannungs-MOSFET S2 geschaltet. Dieser zweite MOSFET S2 ist dabei in der Weise angeordnet, dass der Strom während einer Leitphase von Drain nach Source fließt. Parallel zu dieser Reihenschaltung ist eine dritte Diode D3 angeordnet, die als schnelle Hochspannungsdiode ausgebildet ist und deren Durchlassrichtung der Durchlassrichtung der ersten parasitären Diode D1 des ersten MOSFETs S1 entspricht.

Parallel zum ersten MOSFET S1 ist eine Treiberschaltung angeordnet, die einen ersten Treiber ST1 zum Schalten der MOSFETs S1 und S2 und einen zweiten Treiber ST2 zum Schalten des Reverse-Recovery-Stromes Iᵣᵣ umfasst. Dabei verbindet der erste Treiber ST1 einen Verbindungspunkt VP zwischen erstem und zweitem MOSFET S1 und S2 mit den Gates der beiden MOSFETs S1, S2. Getriggert wird der erste Treiber ST1 mit einem Taktsignal des Wandlers, das im vorgegebenen Takt den Verbindungspunkt VP an den Eingang des ersten Treibers ST1 schaltet.

Der zweite Treiber ST2 schaltet den Verbindungspunkt VP über die vierte Diode D4 an die Kathode der ersten Diode D1. Am Eingang des zweiten Treibers ST2 liegt dabei das inverse Taktsignal des Wandlers an. Dazu wird der invertierte Eingang des zweiten Treibers ST2 im vorgegeben Takt an den Verbindungspunkt VP geschaltet.

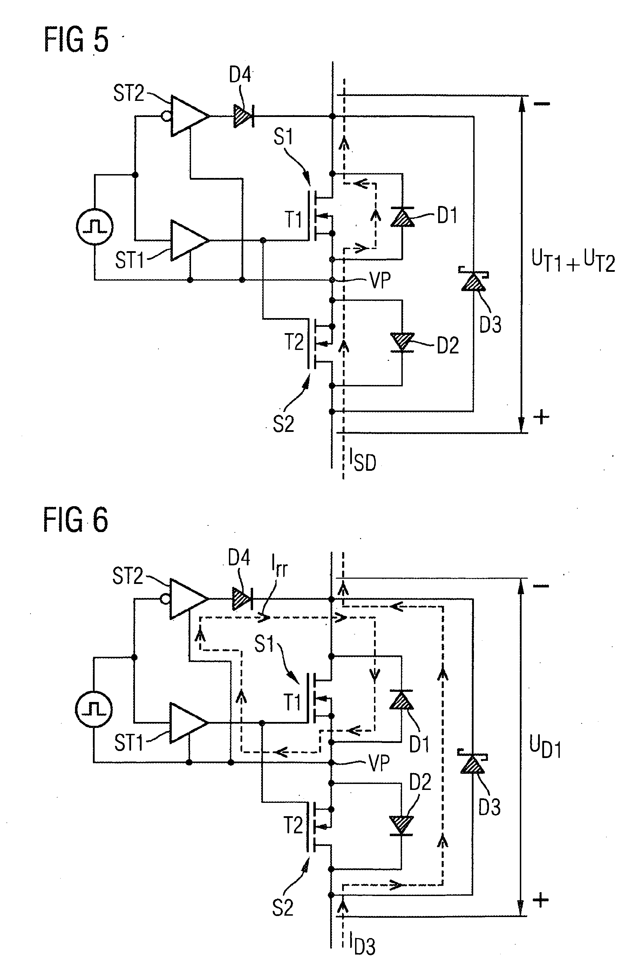

In Figur 5 ist der Stromfluss zu Beginn einer Leitphase L dargestellt. Über den ersten Treiber ST1 liegt die Versorgungsspannung (z.B. 15V) an den Gates der beide MOSFETs S1 und S2 an, welche somit eingeschaltet sind. Der zweite Treiber ST2 schaltet invers zum ersten Treiber ST1, der Pfad des Reverse-Recovery-Stromes Iᵣᵣ ist also unterbrochen. Der Strom I_{SD} fliest über den Transistor des zweiten MOSFETs S2 und die parasitäre Diode D1 des ersten MOSFETs S1. Dabei wird der gegenüber Hochspannungsdioden geringere Durchgangswiderstand der MOSFETs genutzt, um die Verluste in der Synchrongleichrichter-Schaltung gering zu halten. Die an den MOSFETs abfallende Spannung ist demnach geringer als die Durchlassspannung der als schnelle Hochspannungsdiode ausgebildeten dritten Diode D3.

Das den beiden Treibern ST1 und ST2 zugeführte Taktsignal ist so beschaffen, dass die Treiber ST1 und ST2 eine vorgegebene Zeitspanne vor Beginn einer Sperrphase Sp umschalten. Diese vorgegeben Zeitspanne bestimmt dabei die Dauer der am Ende einer Leitphase L vorgesehenen Kommutierungsphase K. Sie wird so eingestellt, dass gerade genug Zeit bleibt, um die in der ersten Diode D1 gespeicherte Ladung mittels Reverse-Recovery-Strom Iᵣᵣ aufzuräumen.

In Figur 6 ist die Synchrongleichrichter-Schaltung während der Kommutierungsphase K dargestellt. Zu Beginn dieser Phase schaltet der erste Treiber ST1 die beiden MOSFETs S1 und S2 ab und der zweite Treiber ST2 schaltet den Strompfad des Reverse-Recovery-Stromes Iᵣᵣ frei. Der ausgeschaltete zweite MOSFET S2 bewirkt, dass der Strom auf die parallel geschaltete dritte Diode D3 kommutiert. Dieser kommutierte Strom I_{D3} fliest dann bis zum Beginn der nächsten Sperrphase. Durch das Einschalten des zweiten Treibers ST2 fliest während dieser Kommutierungsphase K auch der Reverse-Recovery-Strom Iᵣᵣ, welcher von der Differenz der Reversspannung der ersten Diode D1 und der Versorgungsspannung des zweiten Treibers ST2 abhängt. Diese beiden Spannungen sind in etwa gleich groß, weshalb der Reverse-Recovery-Strom Iᵣᵣ nur geringe Werte annimmt.

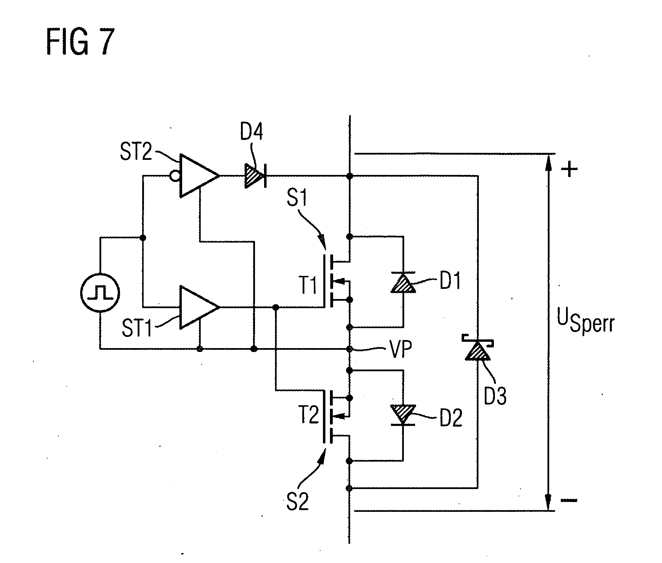

Die letzte Phase vor Beginn des nächsten Zyklus bildet die in Figur 7 dargestellte Sperrphase Sp. Die Schaltzustände der Treiber ST1 und ST2 bleiben unverändert, die MOSFETs sind also weiterhin abgeschaltet und der Strompfad des Reverse-Recovery-Stromes Iᵣᵣ in Durchlassrichtung der vierten Diode D4 offen. Die umgepolt anliegende Sperrspannung USperr bewirkt jedoch aufgrund der sperrenden vierten Diode D4 keinen umgekehrten Stromfluss durch diesen Strompfad. Ebenso sperrt die erste Diode D1 einen Stromfluss durch die MOSFETs S1 und S2 und die dritte Diode D3 einen Stromfluss durch den Kommutierungszweig.

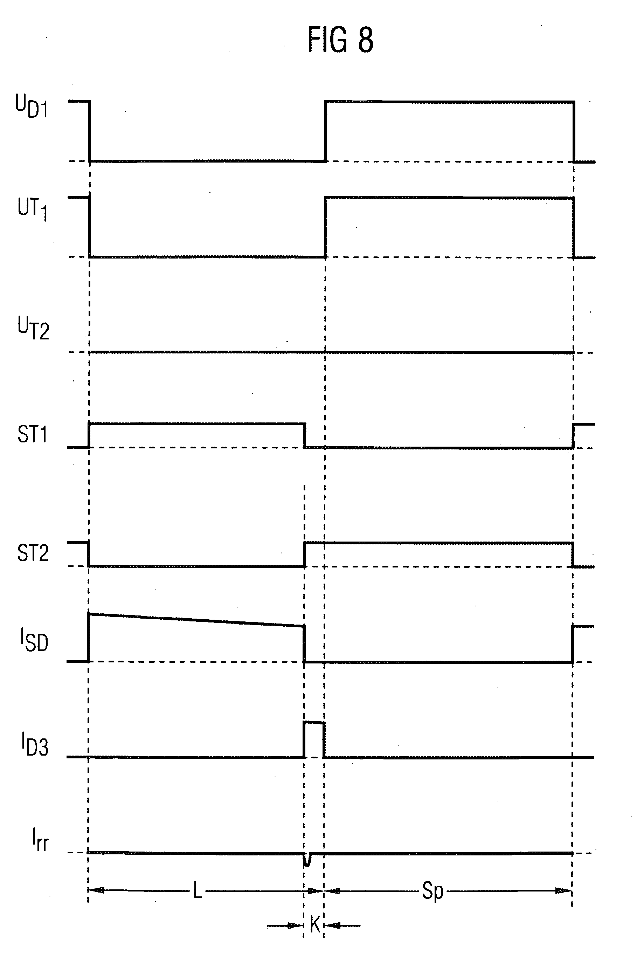

In Figur 8 sind die Verläufe der an der ersten Diode D1 und an den Transistoren T1, T2 anliegenden Spannungen U_{D1}, U_{T1}, U_{T2} sowie die Schaltzustände der Treiber ST1 und ST2 sowie des Weiteren der Strom durch die MOSFETs I_{SD}, der Strom durch den Kommutierungszweig I_{D3} und der Reverse-Recovery-Strom Iᵣᵣ während der unterschiedlichen Phasen dargestellt.

Ein Schaltzyklus beginnt mit einer Leitphase L. Über den ersten Treiber ST1 liegt an den Gates der MOSFETs S1, S2 eine Steuerspannung (z.B. 15V) an. Der invers dazu arbeitende zweite Treiber ST2 hält den Strompfad des Reverse-Recovery-Stromes Iᵣᵣ unterbrochen. Durch die MOSFETs S1, S2 fließt Strom I_{SD} (z.B. 10-20A), wobei sich z.B. durch einen kontinuierlichen Betrieb des Wandlers ein abfallender Verlauf ergibt. Der Wert der Spannung am ersten Transistor U_{T1} entspricht dabei der Durchlassspannung der ersten Diode D1. Der Wert der Spannung am zweiten Transistor U_{T2} ergibt sich als Produkt aus dem Strom I_{SD} und dem Durchgangswiderstand. (z.B. 100mV) .

Der letzte Abschnitt der leitenden Phase L ist als Kommutierungsphase K ausgebildet. Ausgelöst wird diese Phase K durch eine Änderung der Schaltzustände beider Treiber ST1 und ST2. Die Werte der Spannungen U_{T1}, U_{T2} und U_{D1} sind gleich Null. Der Strom I_{SD} kommutiert auf den Kommutierungszweig mit der als schnelle Hochleistungsdiode ausgebildeten dritten Diode D3 und behält seinen abfallenden Verlauf bis zum Beginn der Sperrphase bei.

Mit dem Beginn der Kommutierungsphase K beginnt auch der Aufräumvorgang der mit einer Ladung behafteten ersten Diode D1. Dazu ist mittels zweiten Treiber ST2 der Reverse-Recovery-Strome Iᵣᵣ durch die vierte Diode D4 frei geschaltet. Die Dauer der Kommutierungsphase K ist dabei so zu wählen, dass der als kleine Stromspitze des Reverse-Recovery-Stromes Iᵣᵣ gekennzeichnete Aufräumvorgang vor Beendigung dieser Phase abgeschlossen ist.

Die abschließende Phase eines Schaltzyklus bildet die Sperrphase Sp. Die Schaltzustände der Treiber ST1 und ST2 bleiben unverändert. Aufgrund der Spannungsumpolung liegen am Transistor T1 und der Diode D1 des ersten MOSFETs S1 und an der dritten Diode D3 Spannungen in der Höhe der Sperrspannung U_{Sperr} an. Die Spannung U_{T2} am zweiten Transistor T2 des zweiten MOSFETs S2 bleibt hingegen unverändert gleich Null bzw. gleich der Durchlassspannung der zweiten Diode D2, wenn ein Leckstrom durch die gesperrte erste Diode D1 fließt. Dieser MOSFET S2 ist somit als Niederspannungs-MOSFET S2 ausgebildet.

Der erfindungsgemäße Schaltungsaufbau eignet sich auch für einen Wandler mit bidirektionaler Energieübertragung. Eine Anwendung ist beispielsweise bei Wandlern für Notstromaggregate gegeben. Im Normalbetrieb werden Akkumulatoren mittels eines Wandlers aus einem Wechselspannungsnetz gespeist. Sekundärseitig wird die gewandelte Spannung mittels Synchrongleichrichter-Schaltung in eine Gleichspannung umgewandelt. Im Falle eines Netzausfalls erfolgt die Energieübertragung in umgekehrter Richtung. Die Synchrongleichrichter-Schaltung ist dann so geschaltet, dass Strom in umgekehrter Richtung fließt, also in der Richtung, die im Normalbetrieb gesperrt ist. Dabei sind beide MOSFETs eingeschaltet. Der Strom fließt somit über den Transistor T1 des ersten MOSFETs S1 und den Transistor T2 des zweiten MOSFETs S2.

## Patentansprüche

1. Synchrongleichrichter-Schaltung zum Einsatz in einem taktenden Wandler, wobei ein erster Metalloxid-Halbleiter-Feldeffekttransistor (S1) mit einer parasitären ersten Diode (D1) zur Gleichrichtung vorgesehen ist und wobei in Reihe mit dem ersten Metalloxid-Halbleiter-Feldeffekttransistor (S1) ein synchron zum ersten Metalloxid-Halbleiter-Feldeffekttransistor (S1) gesteuerter zweiter Metalloxid-Halbleiter-Feldeffekttransistor (S2) mit einer parasitären zweiten Diode (D2) in der Weise angeordnet ist, dass die Durchlassrichtung der zweiten Diode (D2) entgegengesetzt zur Durchlassrichtung der ersten Diode (D1) ist, **dadurch gekennzeichnet, dass**
- parallel zu der aus den beiden Metalloxid-Halbleiter-Feldeffekttransistoren (S1, S2) bestehenden Reihenschaltung eine dritte Diode (D3) angeordnet ist, deren Durchlassrichtung der Durchlassrichtung der ersten Diode (D1) entspricht, und dass
- parallel zum ersten Metalloxid-Halbleiter-Feldeffekttransistor (S2) eine schaltbare Spannungsquelle in der Weise vorgesehen ist, dass der positive Pol der Spannungsquelle mit der Kathode der ersten Diode (D1) und der negative Pol der Spannungsquelle mit der Anode der ersten Diode (D1) verbunden sind.

2. Synchrongleichrichter-Schaltung nach Anspruch 1, **dadurch gekennzeichnet, dass** der taktende Wandler als Bidirektional-Wandler ausgebildet ist.

3. Synchrongleichrichter-Schaltung nach Anspruch 1 oder 2, **dadurch gekennzeichnet, dass** zur Ansteuerung des ersten und des zweiten Metalloxid-Halbleiter-Feldeffekttransistors (S1, S2) ein erster Treiber (ST1) vorgesehen ist, der mit einem Taktsignal des Wandlers beaufschlagt ist.

4. Synchrongleichrichter-Schaltung nach einem der Ansprüche 1 bis 3, **dadurch gekennzeichnet, dass** die schaltbare Spannungsquelle in der Weise ausgebildet ist, dass ein mit dem inversen Taktsignal des Wandlers beaufschlagter zweiter Treiber (ST2) eine Spannungsquelle über eine vierte Diode (D4) parallel zum ersten Metalloxid-Halbleiter-Feldeffekttransistor (S1) schaltet und dass die Kathode der vierten Diode (D4) mit der Kathode der ersten Diode (D1) verbunden ist.

5. Synchrongleichrichter-Schaltung nach Anspruch 4, **dadurch gekennzeichnet, dass** ein Verbindungspunkt (VP) zwischen dem ersten Metalloxid-Halbleiter-Feldeffekttransistors (S1) und dem zweiten Metalloxid-Halbleiter-Feldeffekttransistors (S2) vorgesehen ist, welcher über den ersten Treiber (ST1) mit den Gates der beiden Metalloxid-Halbleiter-Feldeffekttransistoren (S1, S2) verbunden ist und dass dieser Verbindungspunkt (VP) des Weiteren über den zweiten Treiber (ST2) und die vierte Diode (D4) mit der Kathode der ersten Diode (D1) verbunden ist.

6. Betriebsverfahren einer Synchrongleichrichter-Schaltung nach einem der Ansprüche 1 bis 5, wobei zu Beginn einer Leitphase (L) beide Metalloxid-Halbleiter-Feldeffekttransistoren (S1, S2) eingeschaltet werden und die Spannungsquelle unterbrochen wird und zu einem vorgegebenen Startzeitpunkt einer Kommutierungsphase (K) vor Beginn der Sperrphase (Sp) die beiden Metalloxid-Halbleiter-Feldeffekttransistoren (S1, S2) abgeschaltet werden und gleichzeitig die Spannungsquelle bis zu Beginn der nächsten Leitphase (L) eingeschaltet wird.

7. Betriebsverfahren einer Synchrongleichrichter-Schaltung nach Anspruch 6, wobei zu Beginn der Kommutierungsphase (K) der Verbindungspunkt (VP) über den zweiten Treiber (ST2) und die vierte Diode (D4) an die Kathode der ersten Diode (D1) geschaltet wird und zu Beginn der Leitphase (L) der Verbindungspunkt (VP) mittels zweitem Treiber (ST2) von der Kathode der ersten Diode (D1) getrennt wird.

## Claims

1. Synchronous rectifier circuit for use in a cyclic converter, whereby a first metal oxide semiconductor field effect transistor (S1) with a parasitic first diode (D1) is provided for rectification and whereby
a second metal oxide semiconductor field effect transistor (S2) controlled synchronously with the first metal oxide semiconductor field effect transistor (S1) with a parasitic second diode (D2)is arranged in series with the metal oxide semiconductor field effect transistor (S1) in such a way that the conducting direction of the second diode (D2) opposes the conducting direction of the first diode (D1), **characterised in that**
- a third diode (D3) is arranged in parallel to the series circuit consisting of the two metal oxide semiconductor field effect transistors (S1, S2), the conducting direction of which corresponds to the conducting direction of the first diode (D1), and that
- a switchable voltage source is provided in parallel to the first metal oxide semiconductor field effect transistor (S2) in such a way that the positive pole of the voltage source is connected to the cathode of the first diode (D1) and the negative pole of the voltage source is connected to the anode of the first diode (D1) .

2. Synchronous rectifier circuit according to claim 1, **characterised in that** the cyclic converter is embodied as a bidirectional converter.

3. Synchronous rectifier circuit according to claim 1 or 2, **characterised in that** a first driver (ST1) is provided for activating the first and the second metal oxide semiconductor-field effect transistors (S1, S2), to which a clock signal of the converter is applied.

4. Synchronous rectifier circuit according to one of the claims 1 to 3, **characterised in that** the switchable voltage source is embodied in a manner such that a second driver (ST2) to which the inverse clock signal of the converter is applied switches a voltage source via a fourth diode (D4) in parallel to the first metal oxide semiconductor field effect transistor (S1) and that the cathode of the fourth diode (D4) is connected to the cathode of the first diode (D1).

5. Synchronous rectifier circuit according to claim 4, **characterised in that** a connecting point (VP) is provided between the first metal oxide semiconductor field effect transistor (S1) and the second metal oxide semiconductor field effect transistor (S2), which is connected via the first driver (ST1) to the gates of the two metal oxide semiconductor field effect transistors (S1, S2) and that this connection point (VP) is further connected via the second driver (ST2) and the fourth diode (D4) to the cathode of the first diode (D1).

6. Method of operating a synchronous rectifier circuit according to one of the claims 1 to 5, whereby at the beginning of a conducting phase (L) both metal oxide semiconductor field effect transistors (S1, S2) are switched on and the voltage source is interrupted and at a predetermined start time of a commutation phase (K) before the beginnning of the blocking phase (Sp) the two metal oxide semiconductor field effect transistors (S1, S2) are switched off and at the same time the voltage source is switched on until the beginning of the next conducting phase (L).

7. Method of operating a synchronous rectifier circuit according to claim 6, whereby at the beginning of the commutation phase (K) the connection point (VP) is switched via the second driver (ST2) and the fourth diode (D4) to the cathode of the first diode (D1) and at the beginning of the conducting phase (L) the connection (VP) is disconnected by means of the second driver (ST2) from the cathode of the first diode (D1) .

## Revendications

1. Circuit redresseur synchrone destiné à être utilisé dans un convertisseur de synchronisation, dans lequel un premier transistor à effet de champ à structure métal-oxyde-semiconducteur (S1) avec une première diode parasitaire (D1) est prévu pour le redressement, et dans lequel, monté en série avec le premier transistor à effet de champ à structure métal-oxyde-semiconducteur (S1), un deuxième transistor à effet de champ à structure métal-oxyde-semiconducteur (S2) commandé de façon synchrone avec le premier transistor à effet de champ à structure métal-oxyde-semiconducteur (S1), avec une deuxième diode parasitaire (D2), est disposé de telle façon que le sens passant de la deuxième diode (D2) est le sens inverse du sens passant de la première diode (D1), **caractérisé en ce que**
- en parallèle au montage en série composé des deux transistors à effet de champ à structure métal-oxyde-semiconducteur (S1, S2) est disposée une troisième diode (D3), dont le sens passant correspond au sens passant de la première diode (D1), et **en ce que**
- en parallèle au premier transistor à effet de champ à structure métal-oxyde-semiconducteur (S2), une source de tension commutable est prévue de telle façon que le pôle positif de la source de tension est relié à la cathode de la première diode (D1) et le pôle négatif de la source de tension à l'anode de la première diode (D1).

2. Circuit redresseur synchrone selon la revendication 1, **caractérisé en ce que** le convertisseur de synchronisation est conçu comme convertisseur bidirectionnel.

3. Circuit redresseur synchrone selon la revendication 1 ou 2, **caractérisé en ce que** pour commander le premier et le deuxième transistor à effet de champ à structure métal-oxyde-semiconducteur (S1, S2), il est prévu un premier driver (ST1) auquel est appliqué un signal d'horloge du convertisseur.

4. Circuit redresseur synchrone selon l'une des revendications 1 à 3, **caractérisé en ce que** la source de tension commutable est conçue de telle façon qu'un deuxième driver (ST2) auquel est appliqué le signal d'horloge inverse, connecte en parallèle au premier transistor à effet de champ à structure métal-oxyde-semiconducteur (S1) une source de tension via une quatrième diode (D4), et **en ce que** la cathode de la quatrième diode (D4) est reliée à la cathode de la première diode (D1).

5. Circuit redresseur synchrone selon la revendication 4, **caractérisé en ce qu'**il est prévu un point de jonction (VP) entre le premier transistor à effet de champ à structure métal-oxyde-semiconducteur (S1) et le deuxième transistor à effet de champ à structure métal-oxyde-semiconducteur (S2), lequel est relié aux grilles des deux transistors à effet de champ à structure métal-oxyde-semiconducteur (S1, S2) via le premier driver (ST1), et **en ce que** ce point de jonction (VP) est relié en outre à la cathode de la première diode (D1) via le deuxième driver (ST2) et la quatrième diode (D4).

6. Procédé de fonctionnement d'un circuit redresseur synchrone selon l'une des revendications 1 à 5, dans lequel, au début d'une phase de conduction (L), les deux transistors à effet de champ à structure métal-oxyde-semiconducteur (S1, S2) seront activés et la source de tension sera coupée, et à un moment prédéfini de démarrage d'une phase de commutation (K), avant le début de la phase de blocage (Sp), les deux transistors à effet de champ à structure métal-oxyde-semiconducteur (S1, S2) seront désactivés et dans le même temps la source de tension sera coupée jusqu'au début de la phase de conduction (L) suivante.

7. Procédé de fonctionnement d'un circuit redresseur synchrone selon la revendication 6, dans lequel, au début de la phase de commutation (K), le point de jonction (VP) sera connecté à la cathode de la première diode (D1) via le deuxième driver (ST2) et la quatrième diode (D4), et au début de la phase de conduction (L), le point de jonction (VP) sera déconnecté de la cathode de la première diode (D1) au moyen du deuxième driver (ST2).
